# EUROPEAN PATENT SPECIFICATION

(11) **EP 3 798 078 B1**
(45) Date of publication and mention of the grant of the patent: **02.08.2023**
(21) Application number: 19865178.8
(22) Date of filing: 16.01.2019
(51) Int. Cl.: B61D 3/20, B61J 3/00, B61C 17/12, B61L 27/04, B61L 15/00

(54) **POWERED RAIL FLAT CAR FOR CONTAINERS AND OPERATION METHOD**
ANGETRIEBENER SCHIENENFLACHWAGEN FÜR CONTAINER UND BETRIEBSVERFAHREN
WAGON PLAT MOTORISÉ POUR CONTENEURS ET PROCÉDÉ DE FONCTIONNEMENT

(30) Priority: 30.09.2018 CN 201811162480
(43) Date of publication of application: 31.03.2021
(73) Proprietor: China Railway Wuhan Survey and Design & Institute Co., Ltd., Wuhan, Hubei 430074 (CN); China Railway Major Bridge Reconnaissance & Design Institute Co., Ltd., Wuhan, Hubei 430000 (CN)
(72) Inventor: CAI, Yunfeng, Wuhan, Hubei 430074 (CN); GAO, Zongyu, Wuhan, Hubei 430074 (CN); XIAO, Yusong, Wuhan, Hubei 430074 (CN); LIU, Changyu, Wuhan, Hubei 430074 (CN); ZHANG, Feng, Wuhan, Hubei 430074 (CN); WANG, Zengli, Wuhan, Hubei 430074 (CN); ZHANG, Jianan, Wuhan, Hubei 430074 (CN); LI, Rui, Wuhan, Hubei 430074 (CN); FANG, Yafei, Wuhan, Hubei 430074 (CN); HUANG, Zexing, Wuhan, Hubei 430074 (CN); CAI, Jiajun, Wuhan, Hubei 430074 (CN); LEI, Nana, Wuhan, Hubei 430074 (CN); GU, Wen, Wuhan, Hubei 430074 (CN)
(74) Representative: Murgitroyd & Company
(86) International application number: PCT/CN2019/071958
(87) International publication number: WO 2020/062725

(56) References cited:
- EP-A1- 0 718 169
- WO-A2-2007/077060
- CN-A- 102 649 511
- CN-A- 104 724 139
- CN-A- 106 115 203
- CN-U- 202 389 377
- CN-U- 205 554 189
- CN-U- 205 906 611
- DE-A1- 10 117 180
- DE-A1- 10 338 606
- FR-B1- 2 664 551
- Anonymous: "NGT CARGO - Schienengüterverkehr von morgen", , 26 April 2017 (2017-04-26), XP055818802, Retrieved from the Internet: URL:https://web.archive.org/web/2021062810 4148/https://www.internationales-verkehrsw esen.de/ngt-cargo/ [retrieved on 2021-06-28]

## Description

### Technical Field

The invention relates to the field of transportation, in particular to a powered rail flatcar for containers and an operation method thereof.

### Background technology

Railway vehicles refer to vehicles for railway transportation. Broadly speaking, a railway vehicle refers to a vehicle that must travel along a dedicated railway. Railway vehicles are tools for transporting passengers and goods. Railway vehicles usually do not have a power device, and the vehicles must be coupled up into a train, so that they can travel along a line by traction of a locomotive.

A locomotive capable of traction, such as an electric locomotive, a diesel locomotive and the like, with power operating on a railway is manual driven; a vehicle that is power driven and coupled up to travel in groups is called a motor vehicle, such as: D-series high-speed train, subway trains, light rail trains and tramcars are manned or unmanned driven; a single vehicle with power is called a rail car and is mostly used for maintenance and repair of railways, and manual driving is adopted at present.

The existing container railway loading vehicles are an unpowered loading vehicle which is required to be made move by other power locomotives, with disadvantages of inflexible movement, low automation degree, repeated withdraws from ongoing journey during transfer of the containers, low transfer efficiency in a combined transportation of the containers, long operation time and high cost.

Published patent document EP0718169 A1 discloses a railway wagon with its own drive assembly being mounted on the main frame of said railway wagon.

The article "NGT CARGO - Schienengüterverkehr von morgen", 26 April 2017 (2017-04-26), XP055818802 discloses automatically operating trains which are composed of individual wagons and high-performance power locomotives.

### Summary of the Invention

The invention aims to provide a powered rail flatcar for containers and an operation method thereof, and aims to solve the problems of inflexible movement and low automation degree of existing container railway loading vehicles.

The invention is implemented as follows:
In one aspect, the invention provides a powered rail flatcar for containers, which comprises a frame structure, wherein a running gear is provided at the bottom of the frame structure, and automatic couplers are provided at two ends of the frame structure; the powered rail flatcar for containers further comprises an onboard control system, an automatic coupler control system, a power and traction system, a brake system and a positioning system positioned on the frame structure; the automatic coupler control system is used for controlling the coupler of the flatcar to be automatically coupled or uncoupled with couplers of other flatcars; the power and traction system comprises a power module used for providing power for the running gear, and the power module can be connected or disconnected with the running gear; the brake system comprises a brake and a brake control device; the positioning system is used for positioning the powered rail flatcar for containers; the onboard control system is in communication connection with the automatic coupler control system, the power and traction system, the brake system and the positioning system and is used for acquiring state information of each system and issuing operating instructions to each system.

Further, the power mode of the power module is an internal combustion power mode, a storage battery mode or a super capacitor mode, and when the powered rail flatcar for containers operates in a single flatcar operating mode or a coupled operating mode, the onboard control system controls the power of the powered rail flatcar for containers to be provided by the onboard power module; when the powered rail flatcar for containers is pulled by the locomotive to operate in the train operating mode, the onboard control system controls the power of the powered rail flatcar for containers to be provided by the locomotive, and the power module is charged by the locomotive through the power cable.

An operating mode control system is further comprised, wherein the operating mode control system comprises an operating mode switching module provided in the onboard control system, the operating mode switching module is used for issuing corresponding operating instructions to each system according to the operating mode instructions issued by the container automatic control system, and controlling the powered rail flatcar for containers to switch among a single flatcar operating mode, a coupled operating mode and a train operating mode.

Further, the operating mode control system also comprises a traction power switching device used for switching a power source of the powered rail flatcar for containers according to an instruction issued by the operating mode switching module, when the instruction of executing a single flatcar operating mode or a coupled operating mode is issued by the operating mode switching module, the power module is controlled to be connected with the running gear, wherein the running gear is powered by the power and traction system, and when the instruction of executing a train operating mode is issued, the power and traction system is controlled to exit from being driven and the running gear is powered by the locomotive.

Further, the operating mode control system also comprises an electrically powered switching device, wherein the electrically powered switching device is used for switching an energy storage form of the powered rail flatcar for containers according to the instruction issued by the operating mode switching module, when the instruction of executing a single flatcar operating mode or a coupled operating mode is issued by the operating mode switching module, the power module is controlled to store energy itself, and when the instruction issued by the operating mode is a train operating mode, the power module is controlled to be charged by the locomotive through a power cable.

A communication subsystem is further comprised, which comprises an onboard wireless communication device, a vehicle-to-vehicle wireless communication device and onboard internet between the powered rail flatcar for containers, wherein the onboard wireless communication device is used for transmitting control data and state data between the powered rail flatcar for containers and the container automatic control system; the vehicle-to-vehicle wireless communication device is used for exchanging short-distance control information between the powered rail flatcars for containers; and the onboard internet is used for transmitting control data and state data between the flatcars in a coupled operating mode or a train operating mode.

On the other hand, the invention also provides a control method for operating modes of powered rail flatcar for containers mentioned above, which comprises the following steps: receiving, by the onboard control system, the instruction of executing a single flatcar operating mode, a coupled operating mode or a train operating mode of the powered rail flatcar for containers, and sending a corresponding instruction to the automatic coupler control system, the power and traction system, the brake system and the positioning system according to the operating mode instruction to control the powered rail flatcar for containers to operate in a single flatcar operating mode, a coupled operating mode or a train operating mode.

Further, when a single flatcar operating mode of the powered rail flatcar for containers is received by the onboard control system, the method comprises the following steps:
acquiring, by the onboard control system, the state information of the positioning system and the operating mode control system according to the instruction for executing the single flatcar operating mode of the powered rail flatcar for containers, issuing the instruction corresponding to the single flatcar operating mode to the automatic coupler control system, the power and traction system, the brake system and the positioning system, controlling, by the automatic coupler control system, the coupler of the flatcar to be uncoupled from couplers of other flatcars, connecting the power module of the power and traction system with the running gear, and positioning the flatcar by the positioning system, and controlling, by the onboard control system, the powered rail flatcar for containers to move to a destination according to a transportation starting point, an operation destination and an operation permission instruction of the container.

Further, when the instruction of executing a coupled operating mode of a powered rail flatcar for containers is received by the onboard control system, the method comprises the following steps: acquiring, by the onboard control system, the state information of the positioning system and the operating mode control system according to the instruction of executing the coupled operating mode and the coupled master-slave relationship instruction of the powered rail flatcar for containers, controlling the powered rail flatcar for containers to reach a designated coupled position and issuing the instruction corresponding to the coupled operating mode to the automatic coupler control system, the power and traction system, the brake system and the positioning system, and controlling, by the automatic coupler control system, the coupler of the flatcar to be automatically connected to the coupler of the adjacent flatcar, and the power module of the power and traction system to be connected with the running gear, wherein the operating power and the braking power of each flatcar of the coupled train group are respectively borne by the power and traction system and the brake system of each flatcar, the power and traction system and the brake system of the slave control flatcar are controlled by an onboard control system of the master control flatcar, and the powered rail flatcar group for containers is controlled by the onboard control system of the master control flatcar to travel to a destination according to a transportation starting point, an operation destination and an operation permission instruction of the container.

Further, when a train operating mode instruction for a powered rail flatcar for containers is received by the onboard control system, the method comprises the following steps:
controlling, by the onboard control system, the powered rail flatcar for containers to reach a designated connection position according to the instruction of executing the train operating mode of the powered rail flatcar for containers and issuing the instruction corresponding to the train operating mode to the automatic coupler control system, the power and traction system, the brake system and the positioning system, controlling, by the automatic coupler control system, the coupler of the flatcar to be automatically connected with the coupler of the adjacent flatcar, and connecting a plurality of powered rail flatcars for containers into a group and coupling up to a locomotive to form a train, separating the power module of a power and traction system from a running gear, exiting the power and traction system from being driven, wherein the running gear is powered by the locomotive, operating power and braking power of each powered rail flatcar for containers are both provided by the locomotive, and the powered rail flatcar group for containers is pulled by a locomotive to a destination according to a transportation starting point, an operation destination and an operation permission instruction of a container.

Compared with the prior art, the invention has the following beneficial effects:
according to the powered rail flatcar for containers and the operation method thereof provided by the invention, the powered rail flatcar for containers is provided with a power module, so that the self-power operation is realized, the movement is flexible, the self-power can directly enter a quayside along a railway line, and the power module can be cooperated with a container loading and unloading machinary in front of a port for loading and unloading ship operation, so that the container intermodal operation process is simplified, the transportation cost is reduced, and the transfer time is reduced; railway loading and unloading and railway transportation can be automatically controlled by utilizing the powered rail flatcar for containers, efficiency can be improved, and labor cost can be greatly reduced; the powered rail flatcar for containers can operate in a single flatcar operating mode or a coupled operating mode, or operate by self power or is pulled through a locomotive by disconnecting/connecting the automatic coupler and the power and traction system from/to the running gear, so that the powered rail flatcar for containers can operate among three operating modes of a single flatcar operating mode, a coupled operating 'mode and a train operating mode, the operating modes are various, and the adaptability is good.

### Brief Description of the Drawings

FIG. 1 is a schematic control diagram of a powered rail flatcar for containers according to an embodiment of the present invention;
FIG. 2 is a schematic view illustrating a loading process in a single flatcar operating mode of a powered rail flatcar for containers for a railway-and-waterway intermodal transportation according to an embodiment of the present invention;
FIG. 3 is a schematic view illustrating a loading process in a coupled operating mode of a powered rail flatcar for containers for the railway-and-waterway intermodal transportation according to an embodiment of the present invention;
FIG. 4 is a schematic view of a powered rail flatcar for containers for a river-and-ocean intermodal transportation according to an embodiment of the present invention.

### Detailed Description of the Invention

The technical solutions in the embodiments of the present invention will be clearly and completely described below with reference to the drawings in the embodiments of the present invention, and it is obvious that the described embodiments are only a part of but not all of the embodiments of the present invention. Based on the embodiments of the present invention, all other embodiments obtained by a person skilled in the art without involving any inventive effort are within the scope of the present invention.

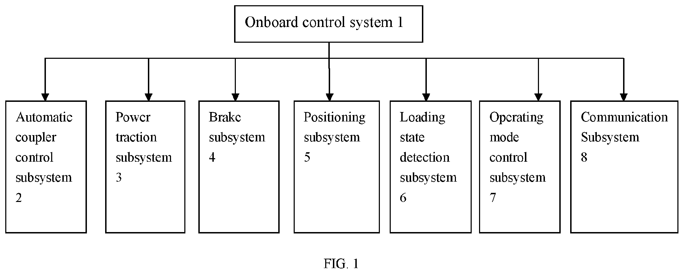

As shown in FIG. 1, an embodiment of the invention provides a powered rail flatcar for containers, which comprises a frame structure, wherein the bottom of the frame structure is provided with a running gear, two ends of the frame structure are provided with automatic couplers which can be automatically coupled or uncoupled with couplers of other flatcars, so as to couple and uncouple the powered rail flatcar for containers. The powered rail flatcar for containers further comprises an onboard control system 1, an automatic coupler control system 2, a power and traction system 3, a brake system 4, a positioning system 5 and a loading state detection system 6 positioned on the frame structure, wherein the onboard control system 1 is in communication connection with the automatic coupler control system 2, the power and traction system 3, the brake system 4, the positioning system 5 and the loading state detection subsystem 6 through an onboard bus for acquiring state information of the automatic coupler control system 2, the power and traction system 3, the brake system 4, the positioning system 5 and the loading state detection subsystem 6, and issuing operating instructions to the automatic coupler control system 2, the power and traction system 3, the brake system 4, the positioning system 5 and the loading state detection subsystem 6 according to an operation plan issued by the container automatic control system.

The running gear comprises a power traction driving carriage, and the power traction driving carriage can operate with power or without power, so that the running gear can adapt to onboard powered output and unpowered output. As the powered rail flatcar for containers has the characteristics of low speed, short distance and short time operating, the running gear can be a power traction driving carriage or a combination of the power traction driving carriage and a common vehicle carriage, and a pair of driving wheels can be one or all pairs of wheels.

The onboard control system 1 is a core system for automatic operation of a powered rail flatcar for containers and comprises a safety computer control system, a plurality of sensors and a data interface. The powered rail flatcar for containers is controlled automatically by the onboard control system 1 to operate according to the operation plan given by the container automatic control system, and comprises controlling the powered rail flatcar for containers to operate in a single flatcar operating mode, a coupled operating mode and a train operating mode. State of a powered rail flatcar for containers is acquired by each system according to an instruction of the onboard control system, and an operating instruction issued by the onboard control system is executed.

The automatic coupler control system 2 is used for controlling the coupler of the flatcar to be automatically connected with or disconnected from couplers of other flatcars according to instructions of the onboard control system 1, the coupler of the flatcar is controlled to be automatically disconnected from the couplers of other flatcars when the powered rail flatcar for containers operates in a single flatcar operating mode, and the coupler of the flatcar is controlled to be automatically connected with couplers of adjacent flatcars when the powered rail flatcar for containers operates in a coupled operating mode or a train operating mode. During automatic connection, the brake system, the power cable and the onboard internet of each powered rail flatcar for containers which are connected with each other are automatically connected; the brake system, the power cable and the onboard internet of each track power flatcar which are mutually uncoupled are automatically uncoupled when there is a need.

The power and traction system 3 comprises a power module used for supplying power to the power traction driving carriage, the power module and the power traction driving carriage can be connected or disconnected so as to adapt to different operating modes of the powered rail flatcar for containers, whether the power module and the power traction driving carriage are connected or not is realized according to instructions of the onboard control system 1, and when the powered rail flatcar for containers operates in a single flatcar operating mode or a coupled operating mode; the power module is connected with the power traction driving carriage, and when the powered rail flatcar for containers operates in the train operating mode, the power module is disconnected from the power traction driving carriage.

The powered rail flatcar for containers is a powered transportation flatcar operating at a short distance, a short time and a low speed, there can be various modes for the power and traction system 3 of the powered rail flatcar for containers to choose on a basis of an operation scenario. The power module can select different power modes and corresponding energy supplementing modes, and specifically, the power modes of the power module can be an internal combustion power mode, a storage battery mode and a super capacitor mode. The internal combustion power supply mode has a long history and mature technology, and can be used as a power mode of a powered rail flatcar for containers; energy is supplemented by supplementing fuel, for which gas stations are needed. The battery mode is a mature scheme used in many transportation systems; when the powered rail flatcar for containers operates in a single flatcar operating mode or a coupled operating mode, energy is supplemented by changing batteries, thus a battery changing station needs to be provided; when the powered rail flatcar for containers operates in a train operating mode, the power module is charged by the locomotive through the power cable and communicates with an electric power source of the whole train powered rail flatcar for containers for charging a battery pack of the powered rail flatcar for containers. There are two ways of charging for the super capacitor power supply mode, when the powered rail flatcar for containers operates in a single flatcar operating mode or a coupled operating mode, the power module is charged by a wireless power supply device embedded in the rail or a third power supply rail provided beside the rail. In particular, an enclosed safety region (preventing people from electric shock) is provided in an area in an operation path of the powered rail flatcar for containers, the flatcar stays at the area or is charged while walking when traveling through the area. The length of the charging area is enough to the time of walking at a specified speed, and the charging energy is enough to the energy reserve of a plurality of operation cycle periods; when the powered rail flatcar for containers operate in a train operating mode, a plurality of powered rail flatcars for containers are connected to form a train, a locomotive is communicated with a powered rail flatcar for containers power supply through a power cable and used for charging a super capacitor bank of the powered rail flatcar for containers, since it is a train charging mode, a charging load will be huge immediately, and the locomotive cannot supply power quickly, the train charging mode is a method for limiting current and prolonging charging time; the two charging modes are alternately used in operation, and the requirement of the powered rail flatcar for containers on operation is met.

The brake system 4 comprises a brake and a brake control device, wherein the brake is controlled by the brake control device to operate according to instructions of the onboard control system. The brake system is a brake system suitable for frequent speed regulation, rapid braking, action slowing with strong braking force, which has two working states including a self-powered operating working state and a working state under train traction, wherein the two working states are adaptively switched according to the operating mode of the powered rail flatcar for containers; when the powered rail flatcar for containers operates automatically (including single flatcar and coupled subordinate operating states), the powered rail flatcar for containers is controlled to brake and slow down by means of power provided by the powered rail flatcar for containers and instructions of the onboard control system 1; under the traction operating state of the train, the powered rail flatcar for containers is controlled to brake and slow down by means of the power of the locomotive and the instruction of the onboard control system 1.

The positioning system 5 is used for positioning the powered rail flatcar for containers and comprises an autonomous positioning module and a relative positioning module. The independent positioning module is used for positioning the powered rail flatcar for containers in the automatic transfer operation; global satellite positioning technology, differential positioning (GPS/BD + differential), radar positioning, beacon + travel range finder and other technologies can be adopted for the autonomous positioning to meet the accuracy requirements of automatic operation of orbital power flatcar. The relative positioning module is used for measuring the relative distance positioning of the relative distance and the direction between the flatcar and an adjacent flatcar, a container loading and unloading machinary and an obstacle; and the relative positioning is used for synchronizing with container loading and unloading machinary during loading and unloading, speed regulation, braking and connection with a powered rail flatcar for containers of an adjacent flatcar during coupling and keeping a safe distance with the powered rail flatcar for containers of the adjacent flatcar during uncoupling. The requirements of automatic loading and unloading and transportation operation are met. The positioning system 5 collects signals and transmits the calculated coordinates to the onboard control system 1 for control of the powered rail flatcar for containers, and transmits the signals to the container automatic control system for coordinated control of automatic operation. The loading state detection system 6 comprises a container loading state detection module and a container number recognition module, wherein the container loading state detection module is used for detecting the loading state of the powered rail flatcar for containers and comprises the number and the loading position of the containers loaded on the powered rail flatcar for containers so as to determine whether loading is completed. One powered rail flatcar for containers can be loaded with at most four TEUs or more small containers, and therefore the loading position of the containers needs to be detected; and the container number recognition module is used for identifying the container number of the container loaded on the powered rail flatcar for containers, and reporting the container number to a control center of the container automatic control system to obtain the current operation destination of the flatcar. The container number recognition module adopts an image recognition technology which is mature, stable and reliable; the image acquisition device and the image recognition technology can complete recognition of all the container numbers loaded by the flatcar, and can judge the loading quantity and the loading position of all the containers loaded by the powered rail flatcar for containers. The container number, the loading state and the powered rail flatcar for containers number information acquired by the loading state detection system are transmitted to the onboard control system and used for controlling the powered rail flatcar for containers and monitoring the container state and the position of the container automatic control system.

It is preferable for this embodiment to further comprise an operating mode control system 7 including an operating mode switching module provided in the onboard control system 1, a traction power switching device communicatively connected with the operating mode switching module, and an electrically powered switching device. The operating mode switching module is used for issuing corresponding operating instructions to each system according to the operating mode switching instructions issued by the container automatic control system, and controlling the powered rail flatcar for containers to switch among a single flatcar operating mode, a coupled operating mode and a train operating mode. The traction power switching device is used for switching a power source of the powered rail flatcar for containers according to an instruction issued by the operating mode switching module, and implementing a power switching function of the onboard powered drive of the flatcar and the traction powered drive of the locomotive; when an instruction of a single flatcar operating mode or a coupled operating mode is issued, the power module is controlled to be connected with the running gear, wherein the running gear is powered by the power and traction system; when an instruction of executing a train operating mode is issued, the power and traction system is controlled to exit from being driven, and the running gear is powered by the locomotive. The electrically powered switching device is used for switching the energy storage form of the powered rail flatcar for containers according to the instruction issued by the operating mode switching module, when the instruction issued by the single flatcar operating mode or the coupled operating mode is the instruction issued, the power module is controlled to store energy itself, and when the instruction issued by the train operating mode is the instruction issued, the locomotive is controlled to charge the power module through the power cable.

A communication system 8 is further comprised, which comprises an onboard wireless communication device, a vehicle-to-vehicle wireless communication device and onboard internet between the powered rail flatcar for containers, and the onboard wireless communication device is used for communicating transmission of control data and state information between the powered rail flatcar for containers and the container automatic control system; the vehicle-to-vehicle wireless communication device is used for exchanging close-range control information between two vehicles in coupling or uncoupling process between the powered rail flatcar for containers and cooperation in loading or unloading between the powered rail flatcar for containers and the loading and unloading machinery; the onboard internet is a wired internet system and is used for transmitting control data and state information between flatcars in a coupled operating mode or a train operating mode of a powered rail flatcar for containers, and when the powered rail flatcar for containers are coupled or form a train, the onboard internet is automatically communicated along with automatic connection of cable network lines.

The embodiment of the invention also provides a method for operating the above powered rail flatcar for containers, which comprises the following steps:
Instructions of executing a single flatcar operating mode, a coupled operating mode or a train operating mode of the powered rail flatcar for containers issued by the container automatic control system are received by the onboard control system, corresponding instructions are issued to the automatic coupler control system, the power and traction system, the brake system and the positioning system according to the operating mode instructions to control the powered rail flatcar for containers to operate in a single flatcar operating mode, a coupled operating mode or a train operating mode.

Further, when a single flatcar operating mode of the powered rail flatcar for containers is received by the onboard control system, the method comprises the following steps:
the state information of the loading state detection system, the positioning system and the operating mode control system is acquired by the onboard control system according to the instruction of executing the single flatcar operating mode of the powered rail flatcar for containers, which comprises the number of containers loaded by the powered rail flatcar for containers, the loading position and the number of the loaded containers are detected by the loading state detection system, and the coordinate position, the operation direction and the transportation speed of the powered rail flatcar for containers are acquired by the positioning system, and the operating mode state and the like of the powered rail flatcar for containers is detected through an operating mode control system; and instructions corresponding to the single flatcar operating mode are issued to an automatic coupler control system, a power and traction system, a brake system and a positioning system. The coupler of the flatcar is controlled by the automatic coupler control system to be automatically uncoupled from couplers of other flatcars; the power module of the power and traction system is connected with a running gear powered by the power and traction system, and the process can be executed by a traction switching device of an operating mode control system; positioning the flatcar by the positioning system; the power module stores energy itself, and the process may be controlled by an electrical switching device of the operating mode control system. The power and traction system, the brake system and the positioning system are controlled by the onboard control system according to the transportation starting point, the operating destination and the operating permission instruction of the container to realize the actions of advancing, retreating, accelerating, decelerating, reversing, parking and the like of the powered rail flatcar for containers, the powered rail flatcar for containers is controlled to reach a designated position, and the execution progress and position are continuously reported to the container automatic control system through the communication system;

In the single flatcar operating mode, the powered rail flatcar for containers operates as an independent transportation group and a self-contained onboard control system, a power and traction system, a brake system, a positioning system and a communication system are adopted for operation, wherein the power and traction system and the brake system are controlled by the onboard control system of the flatcar; a single flatcar is controlled by the railway container automatic control system as an independent group to operate under a single flatcar operating mode. A single flatcar operation by the control system is identified when the number of the first flatcar is the same as the number of the last flatcar.

Further, when an instruction of executing a coupled operating mode of a powered rail flatcar for containers is received by the onboard control system, the method comprises the following steps: state information of a loading state detection system, a positioning system and an operating mode control system is acquired by the onboard control system according to the instruction of executing a coupled operating mode and a master-slave relation of the powered rail flatcar for containers, which comprises the number, the loading position and the number of the loaded containers of containers loaded by the powered rail flatcar for containers detected by the loading state detection system, the coordinate position, the operation direction and the transportation speed of the powered rail flatcar for containers acquired by the positioning system, the operating mode state of the powered rail flatcar for containers detected by the operating mode control system and the like; a powered rail flatcar for containers is controlled to reach a designated coupled position, and an instruction corresponding to a coupled operating mode is issued to an automatic coupler control system, a power and traction system, a brake system and a positioning system, couplers of the vehicles are controlled by the automatic coupler control system to be automatically connected with couplers of adjacent flatcars, meanwhile, the brake system, a power cable and onboard internet of each vehicle of a coupled vehicle group are automatically connected, and the onboard control systems of the vehicles are connected through the onboard internet; the power module of the power and traction system is connected with a running gear powered by the power and traction system, and the process can be executed by a traction power switching device of the operating mode control system; the power module stores energy itself, and this process may be controlled by the electrically powered switching device of the operating mode control system. The operating power and the braking power of each flatcar of the coupled flatcar group are respectively borne by the power and traction system and the brake system of each flatcar, the power and traction system and brake system of a slave control vehicle are controlled by a master control vehicle, and instructions of operating direction, operating speed, acceleration, deceleration, braking and the like are issued to the power and traction system, the brake system and the positioning system of the master control flatcar through an onboard bus of the master control flatcar according to a transportation starting point, an operating destination and an operating permission instruction of a container. Meanwhile, synchronous operating instructions such as operating direction, operating speed, acceleration, deceleration, braking and the like are issued to all onboard control systems of slave control flatcars of the flatcar group through an onboard internet; and the power and traction system and the brake system are adjusted by a slave control flatcar according to the instruction of the master control flatcar so as to synchronously operate with the flatcar group until the slave control flatcar parks at a designated position, and the master control flatcar and the slave control flatcar continuously report the execution progress and position to the container automatic control system through the communication system in the operation process.

When in a coupled operating mode, the first flatcar (head flarcar) in the operation direction of the coupled flatcar group is automatically regarded as a master control flatcar, other flatcars are automatically defined as slave control flatcars controlled by the master control flatcar in operation; when the flatcar group reverses operation, the last flatcar automatically turns into the master control flatcar from the slave control flatcar, and the original first flatcar turns into the last flatcar, then it is automatically regarded as a slave control flatcar; the coupled flatcar group is controlled by the automatic control system for railway containers to operate as an integral unit. A coupled operation by the control system is identified when the number of the head flatcar is the same as the number of the last flatcar of the flatcar group.

Further, when a train operating mode instruction for a powered rail flatcar for containers is received by the onboard control system, the method comprises the following steps:
the powered rail flatcar for containers is controlled by the onboard control system to reach a designated connection position according to an instruction of executing the train operating mode of the powered rail flatcar for containers and an instruction corresponding to the train operating mode to the automatic coupler control system, the power and traction system, the brake system and the positioning system is issued, the coupler of the flatcar is controlled by the automatic coupler control system to be automatically connected with the coupler of the adjacent flatcar, and a plurality of powered rail flatcars for containers are connected into a group and coupled up to a locomotive to form a train. Meanwhile, a brake system, a power cable and onboard internet of each flatcar are automatically connected, an onboard control system of each flatcar is connected through the onboard internet, a power module of a powered rail flatcar for containers and a power module of the traction system are separated from a running gear, the power and traction system exit from being driven, and the process can be executed by a traction switching device of an operating mode control system; the charging power supply of the power module is borne by the locomotive power and traction system, the running gear is powered by the locomotive, and the process can be controlled by the electrically powered switching device of the operating mode control system. The operating power and the braking power of each powered rail flatcar for containers are provided by the locomotive, and the brake system of each powered rail flatcar for containers is controlled by the locomotive of the master control car; according to the transportation starting point, the operating destination and the operating permission instruction of the container, the powered rail flatcar group for containers is pulled by the locomotive to travel to a destination, and the execution progress and the position are continuously reported by the locomotive to the container automatic control system through the communication system in the operating process of the locomotive.

The first flatcar in the operating direction of the train is a locomotive, which is automatically regarded as a main control flatcar after being connected; the first powered rail flatcar for containers and other powered rail flatcar for containers are automatically defined as slave control flatcars which are controlled by a locomotive of the master control flatcar in operation; when the train reverses operation, the locomotive is still the main control flatcar; the train is controlled by the automatic control system for railway containers to operate as an integral unit. The number of the locomotive, the number of the first flatcar and the number of the last flatcar together are identified as operation of the train by the control system;
when a fault of the flatcar is detected by the onboard control system of the powered rail flatcar for containers, the maintenance and safety measures are formulated according to the fault classification, and a maintenance department is informed; when the single flatcar operates, it had better stop working as soon as possible and enter a maintenance area; under the coupled operating mode and the train operating mode, the flatcar continues to travel to an end point and enter a maintenance area on condition of safety.

The onboard control system and the station interlocking system exchange flatcar number, position and operation permission information through a wireless communication system, an onboard transponder and an interface.

According to the powered rail flatcar for containers provided by the embodiment of the invention, the powered rail flatcar for containers can be used as a land connection transportation tool between the river-and-ocean intermodal ports. No matter whether between the river port and the river port or the river port and the sea port, or the sea port and the sea port, or between port areas within a combined port, the powered rail flatcar for containers and the method for transporting the containers have great economic value, so long as there is stable and large container exchange capacity between the ports (areas) connected by the system, and the straight distance between the ports (areas) does not exceed 200 kilometers. According to the powered rail flatcar for containers provided by the embodiment of the invention, the powered rail flatcar for containers can also be used as a container connection transportation tool for disorganizing and grouping and taking and delivering operations between ports and yards or at the quaysides in railway port stations, and when the straight line distance between the stations and the ports (areas) does not exceed kilometers, application of the powered rail flatcar for containers and the method for transporting the containers for transporting containers has higher economic value. It can also be used as other scenarios for rail transportation.

A method for transporting a container using such a powered rail flatcar for containers of the present invention will now be described with reference to the scenario of a railway-and-waterway intermodal transportation.

The containers are transported by the powered rail flatcar for containers in a single flatcar operating mode, a coupled operating mode or a train operating mode.

Further, when the containers are transported by the powered rail flatcar for containers in a single flatcar operating mode, the method comprises the following steps:

### (1) System power-on check and status reporting:

an instruction of executing a single flatcar operating mode is issued by the container automatic control system to the powered rail flatcar for containers, the instruction is received by the onboard control system to control the automatic coupler control system, the power and traction system, the brake system and the positioning system to be in a single flatcar operating mode state; the powered rail flatcar for containers single car system is self-started (or dormancy awaken), a brake position is maintained, a system power supply is turned on, the onboard control system is power-on checked, and a communication system, a positioning system and an onboard state detection system are activated; the status of the power and traction system, the walking system, the body system, the vehicle connections (single flatcar from/coupled form/train form), vehicle loading (heavy flatcar/empty flatcar) state are checked;
all states are acquired by the onboard control system by the onboard bus, self-checked results, located positions, loading states, number of the loaded containers and connection states are reported by the onboard wireless communication device (a permission of entry into the operation system is made if the result is a pass, otherwise the flatcar will be on a list of fault flatcars); it is determined by the operation control mode system that the flatcar is in a single flatcar operating mode state, executes the single flatcar operating control mode and waits for an operating instruction.

### (2) Loading

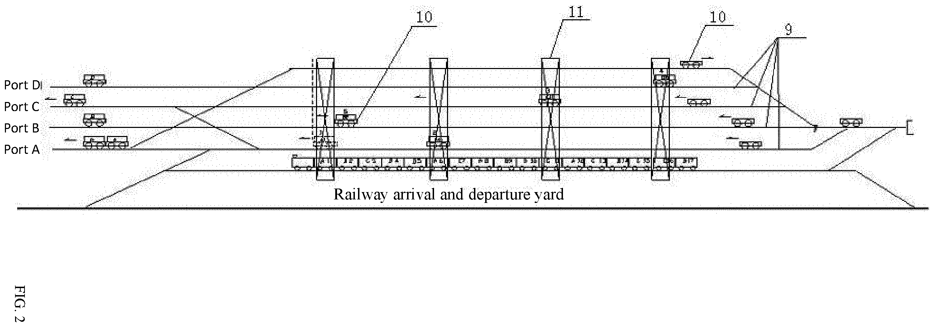

As shown in FIG. 2, the loading process of the powered rail flatcar for containers during the single operation of the powered rail flatcar for containers is explained by taking the case where the railway-and-waterway intermodal transportation is carried out by transporting the containers from a railway arrival and departure yard to the port for example. a loading position for loading operation and quantity instruction of a railway container automatic control system are received by wireless data of the onboard wireless communication device of the powered rail flatcar for containers 10, transmitted to the onboard control system through an onboard bus; positioning information of a positioning system is received by the onboard bus, loading state detection system state information is checked, a power and traction system is controlled by the onboard control system, and the powered rail flatcar for containers 10 is enabled by the brake system to travel to a loading position of a loading line 9; after the powered rail flatcar for containers 10 reaches a designated position, the vehicle-to-vehicle wireless communication system is activated to exchange position data with the container loading and unloading machinary 11, the powered rail flatcar for containers 10 keeps a coordinated loading distance with and move synchronously with the container loading and unloading machinary 11 to finish loading of the powered rail flatcar for containers 10, the vehicle-to-vehicle wireless communication system and the container loading and unloading machinary 11 confirm the completion of loading operation, and the container number of the exchanged loading is confirmed; the quantity of containers loaded, the loading positions and the number of the loaded containers are transmitted by the loading state detection system to an onboard control system through an onboard bus, and the onboard control system reports the flatcar position, the number of the loaded containers, the loading position and the number of the loaded containers to a container automatic control center through the onboard wireless communication device; an operating instruction will be issued.

### (3) Single flatcar operation

An operating destination instruction is issued and a free distance in front of the forward road in operation (operating permission) is delivered by a container automatic control system to a powered rail flatcar for containers through the onboard wireless communication device; an operating instruction is issued by the onboard control system to an automatic coupler control system, a power and traction system, a brake system, a positioning system and a loading state detection system, and the powered rail flatcar for containers travels to the destination; during operation, the flatcar position and the loading state are continuously and uninterruptedly reported to the container automatic control system through the onboard wireless communication device, and the operation permission, the target distance and the parking position are continuously received through the communication system or the transponder interface. The operating speed and the parking position of the flatcar are controlled by the onboard control system according thereto.

### (4) Unloading

The powered rail flatcar for containers reaches a designated unloading line parking position, the onboard wireless communication device is activated to be connected with the container automatic control system, the vehicle-to-vehicle wireless communication device and the container loading and unloading machinery communication system, and the unloading line container loading and unloading machinary position data are received; the power and traction system, and the brake system are controlled by the onboard control system to enable the powered rail flatcar for containers to synchronously move along with the position of the communication container loading and unloading machinary to wait for unloading; the loading state detection system is in a dynamic detection state in the unloading process, and each change is reported to the onboard control system; after unloading of the container loading and unloading machinary, the loading state detection system reports that the loading state is empty; the vehicle-to-vehicle wireless communication device and the container loading and unloading machinary confirm the completion of unloading operation, and exchange the confirmed container number of unloading;

### (5) Returning or dormancy

After unloading, the powered rail flatcar for containers is separated from the loading and unloading line and travels to a designated place for standby or dormancy according to the instruction of the container automatic control system.

During dormancy, a dormancy state is set by the onboard control system, the brake system is set to be in a brake state which is kept, and the communication system and the positioning system are in a power-saving working state (detection frequency is reduced and communication interval is prolonged); and the loading state detection system and the power and traction system are in a dormant state.

Further, when the powered rail flatcar for containers is used for transporting the container in a coupled operating mode, the method comprises the following steps:

### (1)Coupling method

A coupled operating instruction is issued and the positioning of a coupled position is delivered by a container automatic control system, the instruction is received by an onboard control system to control a power and traction system and a brake system to enable a powered rail flatcar for containers single car to travel to the vicinity of an adjacent flatcar to be connected, and prepare being coupled; a coupling instruction, a coupled flatcar located position, a coupled flatcar number,
a communication connection ID number of the container automatic control system are received by both the coupled flatcars, and an active flatcar and a passive flatcar (generally, a parking flatcar is defined as a passive flatcar) are designated. Vehicle-to-vehicle wireless communication devices of both the active flatcar and the passive flatcar are activated and connected to exchange data for coupling; and both of them activate the automatic couplers and exchange the located positions of the two flatcars. The two flatcars activate a relative positioning device to measure the relative distance therebetween, an active flatcar controls a power and traction system and a brake system according to measurement data to control the walking speed of a rail power flatcar, the active flatcar approaches to a passive flatcar until the active flatcar is connected, an automatic coupler control system is controlled to enable a coupler of the flatcar and a coupler of an adjacent flatcar to be automatically connected with a plurality of rail power flatcars to form a flatcar group, and an onboard power cable of each flatcar is connected with the onboard internet; and the vehicle-to-vehicle wireless communication device and the relative positioning system are closed to complete coupling. After coupling, the functions of loading, unloading, coupled operation, coupled release, dormancy or awakening can be played.

### (2) system power-on check and status reporting:

the powered rail flatcar for containers single car system is self-started (or dormancy awaken), a brake position is maintained, a system power supply is turned on, the onboard control system is power-on checked, and a communication system, a positioning system and an onboard state detection system are activated; the status of the power and traction system, the walking system, the body system, the vehicle connections (single flatcar from/coupled form/train form), vehicle loading (heavy flatcar/empty flatcar) are checked;
all states are acquired by the onboard control system by the onboard bus, self-checked results, located positions, loading states, number of the loaded containers and connection states are reported by the onboard wireless communication device (a permission of entry into the operation system is made if the result is a pass, otherwise the flatcar will be on a list of fault flatcars); it is determined by the operation control mode system that the flatcar is in a coupled operating mode state, executes the coupled operating mode control mode and waits for an operating instruction. When the flatcar is at the front and tail of the coupled flatcar group, the head flatcar is determined to be the main control flatcar according to the operating direction, while the flatcar at the tail of the coupled flatcar group is marked as the tail flatcar, and the flatcars in the middle of the coupled flatcar group are marked as the driven flatcars.

### (3) Loading

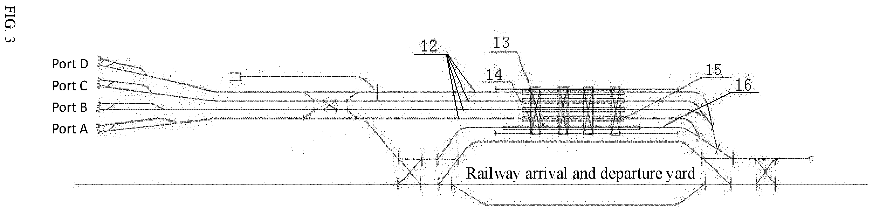

As shown in FIG. 3, the loading process of the powered rail flatcar for containers during the coupled operation of the powered rail flatcar for containers is explained by taking the case where the railway-and-waterway intermodal transportation is carried out by transporting the containers from a railway arrival and departure yard to the port for example. A loading position for loading operation and quantity instruction of a container automatic control system are received by an onboard wireless communication device of the powered rail flatcar for containers, transmitted to the onboard control system through an onboard bus which receives positioning information of a positioning system, and checks a loading state detection system, a power and traction system and a brake system are controlled by the onboard control system to enable the powered rail flatcar group for containers 15 to travel to the loading position of the loading line 12; after the powered rail flatcar group 15 for containers reaches a designated position, the vehicle-to-vehicle wireless communication device is activated to exchange position data with the container loading and unloading machinary 14, the powered rail flatcar group 15 for containers and the container loading and unloading machinary 14 keep a coordinated loading distance and move synchronously, and the container loading and unloading machinary 14 reverses a container positioned on the train 13 on the departure line 16 to the powered rail flatcar group 15 for containers, so that the powered rail flatcar group 15 for containers is loaded. The vehicle-to-vehicle wireless communication device and the container loading and unloading machinary 14 confirm the completion of loading operation; the vehicle-to-vehicle wireless communication device is closed; the loading state detection system checks the quantity, the loading position and the container numbers of the loaded containers and transmits the quantity, the loading position and the number of the loaded containers to an onboard control system through an onboard bus; an instruction will be executed.

### (4) Coupled operation

A head flatcar of the coupled flatcar group is defined as an active flatcar, a flatcar at the tail is defined as a tail flatcar, other flatcars are defined as passive flatcars, and the coupled flatcar group operates as a whole; operating instructions are issued by a container automatic control system to an onboard control system of an active flatcar (a head flatcar), and operation directions, operation speeds, accelerations, decelerations, braking instructions and other instructions are issued by the onboard control system to a power and traction system, a brake system and a positioning system of the active flatcar (the head flatcar) through an onboard bus of the active flatcar; synchronous operating instructions such as operation direction, operation speed, acceleration, deceleration, braking and the like are issued by the onboard internet to all passive onboard control systems of the flatcar group; and the flatcars are parked until a designated position is reached. During operation, the active flatcar continuously reports position, speed, flatcar number/flatcar group number and other data to the container automatic control system through the onboard wireless communication device; in operation, the tail flatcar is changed into an active vehicle (head flatcar) and the original head flatcar is changed into a tail flatcar (tail flatcar is a special passive vehicle).

### (5) Uncoupling

During uncoupling, the active flatcar activates the vehicle-to-vehicle wireless communication device according to the instruction of the container automatic control system and the provided passive flatcar positioning coordinate, the active flatcar and the passive flatcar make their automatic couplers uncoupled, the active flatcar activates a relative positioning device to measure a relative position from the passive flatcar, the operating speed of the walking system, the power and traction system and the brake system is adjusted, the connection is discontinued, and meanwhile the onboard power cable and the onboard internet are disconnected. The active flatcar gradually leaves the passive flatcar and keeps a certain safety distance therewith, the vehicle-to-vehicle wireless communication device is disconnected, and uncoupling is achieved. The originally coupled active flatcar operates as a single flatcar, and the head flatcar of the coupled flatcar group is left changed into an active flatcar from a passive flatcar.

### (6) Uncoupling into two groups

When the coupled is released into two flatcar groups, an active flatcar activates a vehicle-to-vehicle wireless communication device according to instructions of a container automatic control system and the provided positioning coordinates (the one actively leaving the flatcar group is known as an active flatcar group and the one staying in situ is known as a passive flatcar group) of two driven flatcars at the position to be uncoupled, an automatic coupler is uncoupled from both the tail part of the active flatcar group and the head part of the to-be-uncoupled flatcar group, and a relative positioning device is activated at the tail part of the active flatcar group to measure a relative position from the passive flatcar. The operating speeds of a walking system, a power and traction system and a brake system are adjusted by a head flatcar of the active flatcar group, and the connection is discontinued; meanwhile, the onboard power cables of the two flatcar groups are disconnected from the onboard internet. The active flatcar gradually leaves the passive flatcar group and keeps a certain safety distance therewith, the vehicle-to-vehicle wireless communication device is disconnected, and uncoupling is achieved. The originally coupled active flatcar groups are changed into new coupled flatcar groups, and the head flatcar of the coupled flatcar group is left changed into an active flatcar from a passive flatcar.

Further, when the containers are transported in a train operating mode by
the powered rail flatcar for containers, the method comprises the following steps:
Train operation is a method for controlling the operation, control and power output of all powered rail flatcar for containers by taking the locomotive as the active flatcar on the basis of coupling.

### (1)Connection of locomotives

A connection instruction and positioning of a connection position are issued by a container automatic control system to a powered rail flatcar for containers, the instruction is received by an onboard control system, a power and traction system and a brake system are controlled to enable a powered rail single flatcar for containers to travel to a connection position, an automatic coupler control system is controlled to enable couplers of the single powered rail flatcar for containers to be automatically connected with couplers of adjacent flatcars, and a plurality of powered rail flatcars for containers are connected into a vehicle group;
a connection instruction of a locomotive and positioning of a connection position are issued by a container automatic control system, which is received by an onboard control system of the locomotive to automatically control (or manually control) the power and traction system and a brake system to be in a group operation to the gathering line to be connected with the powered rail flatcar group for containers to be coupled up with the train; both flatcars to be coupled up receive an instruction of coupling up the locomotives from the container automatic control system, a located position of the coupled flatcars, a coupled flatcar/locomotive number, a communication connection ID number, a designated active flatcar (locomotive) and a passive flatcar (generally, a parked flatcar is defined as a passive flatcar/flatcar group). Vehicle-to-vehicle wireless communication devices of the active flatcar (a locomotive) and a passive flatcar are activated and connected to exchange data for coupling; and both flatcars activate the automatic couplers and exchange the located positions thereof. The relative positioning devices of both flatcars are activated to measure the relative distance between the flatcars, the active flatcar controls the flatcar body system, the power and traction system, the walking speed of the walking system and the walking speed of the brake system according to the measurement data, the active flatcar approaches to the passive flatcar until the active flatcar is connected, the automatic coupler control system locks the automatic coupler, and an air braking air pipe, an onboard power cable and onboard internet of the locomotive and each powered rail flatcar for containers are connected; the vehicle-to-vehicle wireless communication device and the relative positioning system are closed to complete the locomotive coupling.

### (2) System check

The powered rail flatcar for containers is set under a train operating mode according to an instruction of a container automatic control system, the onboard control system controls the power and traction system of each powered rail flatcar for containers to be disconnected from a power module, the onboard control system and a brake system of each powered rail flatcar for containers are controlled by a locomotive which outputs compressed air to charge a brake air cylinder of each powered rail flatcar for containers, and a power supply is output to charge the power module of each powered rail flatcar for containers; the locomotive pulls the coupled flatcar group to operate in a train operating mode according to the operating instruction of the container automatic control system, and the braking of the whole train coupled flatcar group is controlled through a braking air pipe and an onboard internet; and the locomotive starts, accelerates and decelerates under the train operating mode according to the operating instruction of the container automatic control system, and controls the braking of the whole train coupled flatcar group through the train air brake system and the onboard internet.

### (3) Train operation

The container automatic control system sends an operating instruction to the locomotive, and the locomotive pulls the powered rail group flatcar for containers to travel to a destination under the train operating mode.

### (4) Uncoupling oflocomotives

The powered rail flatcar group for containers reaches a designated parking position of a unloading line, a container automatic control system issues a locomotive uncoupling instruction, the locomotive is uncoupled from the powered rail flatcar group for containers, the uncoupled powered rail flatcar group for containers operates from a train operating mode to a coupled operating mode, and a head flatcar of the powered rail flatcar group for containers is changed into an active car.

### (5) Unloading

After the locomotive is uncoupled, the powered rail flatcar group for containers receives the position data of the container loading and unloading machinary in the unloading line, and the powered rail flatcar group for containers move synchronously along with the position of the container loading and unloading machinary in the unloading line, so that unloading of the powered rail flatcar for containers is realized.

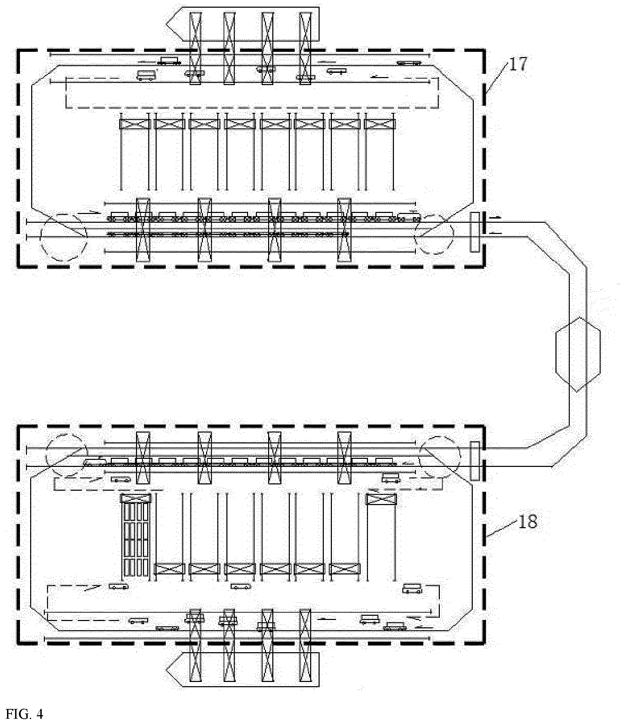

Shown in FIG. 4 is a schematic diagram of application of the powered rail flatcar for containers of the present invention for transporting a container in a river-and-ocean intermodal transportation scenario from the first port 17 to the second port 18, and the method thereof is similar to the method for the foregoing railway-and-waterway intermodal transportation, thus is not repeated herein.

The embodiment of the invention has the following beneficial effects:
1. The powered rail flatcar for containers is an important transportation tool of the automatic control system for the railway-and-waterway intermodal transportation and river-and-ocean intermodal transportation, and realizes the automatic transfer operation of the intermodal transportationion of containers by cooperating with a special railway, a special automatic loading and unloading tool, a special automatic container flatcar, a special container transportation management and a container automatic control system.
2. The container automatic control system has the advantages that the loading and unloading operation flow is reduced, the assembly line operation can be realized, the transfer transportation efficiency is extremely high, the transfer time of containers is reduced, the railway-and-waterway intermodal transportation is inverted through a powered rail flatcar for containers, the area of a railway marshalling yard is reduced, and the operation efficiency of a railway harbour station is improved.
3. The pollutant emission of railway transportation is less than one seventh of the emission of automobiles with the same transportation volume, and few pollutants are emitted by electric traction powered rail flatcar for containers, flatcar groups or trains.
4. Railway loading and unloading and railway transportation can realize automatic control, efficiency can be improved, labor cost can be greatly reduced, and the whole transportation system can not need manual intervention except dispatching instruction staff and maintenance personnel. While the invention has been particularly shown and described with reference to preferred embodiments thereof, it will be understood by a person skilled in the art that various changes in form and details may be made therein without departing from the scope of the invention as defined by the claims.

## Claims

1. A powered rail flatcar for containers comprising a frame structure, whereby: a running gear is provided at the bottom of the frame structure, and automatic couplers are provided at two ends of the frame structure; the powered rail flatcar for containers further comprises an onboard control system (1), an automatic coupler control system (2), a power and traction system (3), a brake system (4) and a positioning system (5) positioned on the frame structure; the automatic coupler control system (2) is used for controlling the coupler of the flatcar to be automatically coupled or uncoupled with couplers of other flatcars; the power and traction system (3) comprises a power module used for providing power for the running gear, and the power module can be connected or disconnected with the running gear; the brake system (4) comprises a brake and a brake control device; the positioning system (5) is used for positioning the powered rail flatcar for containers; the onboard control system (1) is in communication connection with the automatic coupler control system (2), the power and traction system (3), the brake system (4) and the positioning system (5) and is used for acquiring state information of each system and issuing operating instructions to each system;
wherein said onboard control system (1) controls the powered rail flatcar for containers to operate in a single flatcar operating mode, a coupled operating mode or a train operating mode;
wherein the power mode of the power module is an internal combustion power mode, a storage battery mode or a super capacitor mode,
and when the powered rail flatcar for containers operates in a single flatcar operating mode or a coupled operating mode, the onboard control system (1) controls the power of the powered rail flatcar for containers to be provided by the power module;
when the powered rail flatcar for containers is pulled by a locomotive to operate in the train operating mode, the onboard control system (1) controls the power of the powered rail flatcar for containers to be provided by the locomotive for charging the power module being in the storage battery mode or the super capacitor mode.

2. The powered rail flatcar for containers of claim 1, **characterized by** further comprising an operating mode control system (7), wherein the operating mode control system (7) comprises an operating mode switching module provided in the onboard control system (1), the operating mode switching module is used for issuing corresponding operating instructions to each system according to the operating mode instructions issued by the container automatic control system, and controlling the powered rail flatcar for containers to switch among a single flatcar operating mode, a coupled operating mode and a train operating mode.

3. The powered rail flatcar for containers of claim 2, **characterized in that**: the operating mode control system also comprises a traction power switching device used for switching a power source of the powered rail flatcar for containers according to an instruction issued by the operating mode switching module, when the instruction of executing a single flatcar operating mode or a coupled operating mode is issued by the operating mode switching module, the power module is controlled to be connected with the running gear, wherein the running gear is powered by the power and traction system, and when the instruction of executing a train operating mode is issued, the power and traction system is controlled to exit from being driven and the running gear is powered by the locomotive.

4. The powered rail flatcar for containers of claim 2, **characterized in that**: the operating mode control system also comprises an electrically powered switching device, wherein the electrically powered switching device is used for switching an energy storage form of the powered rail flatcar for containers according to the instruction issued by the operating mode switching module, when the instruction of executing a single flatcar operating mode or a coupled operating mode is issued by the operating mode switching module, the power module stores energy itself, and when the instruction issued by the operating mode is a train operating mode, the power module is controlled to be charged by the locomotive for charging said power module being in the storage battery mode or the super capacitor mode.

5. The powered rail flatcar for containers of claim 1, **characterized by** further comprising a communication subsystem (8) comprising an onboard wireless communication device, a vehicle-to-vehicle wireless communication device and onboard internet between the powered rail flatcar for containers, wherein the onboard wireless communication device is used for transmitting control data and state data between the powered rail flatcar for containers and the container automatic control system; the vehicle-to-vehicle wireless communication device is used for exchanging short-distance control information between the powered rail flatcars for containers; and the onboard internet is used for transmitting control data and state data between the flatcars in a coupled operating mode or a train operating mode.

6. A control method for operating modes of powered rail flatcar for containers as claimed in any one of claims 1 to 5, comprising receiving, by the onboard control system (1), the instruction of executing a single flatcar operating mode, a coupled operating mode or a train operating mode of the powered rail flatcar for containers, and sending an instruction corresponding to the single flatcar operating mode, the coupled operating mode or the train operating mode to the automatic coupler control system (2), the power and traction system (3), the brake system (4) and the positioning system (5) according to the received operating mode instruction to control the powered rail flatcar for containers to operate in a single flatcar operating mode, a coupled operating mode or a train operating mode.

7. The control method for the operating modes of the powered rail flatcar for containers of claim 6, **characterized in that** when the single flatcar operating mode of the powered rail flatcar for containers is received by the onboard control system (1), the method comprises the following steps:
acquiring, by the onboard control system (1), the state information of the positioning system (6) and the operating mode control system (7) according to the instruction for executing the single flatcar operating mode of the powered rail flatcar for containers,
issuing the instruction corresponding to the single flatcar operating mode to the automatic coupler control system (2), the power and traction system (3), the brake system (4) and the positioning system (5),
controlling, by the automatic coupler control system (2), the coupler of the flatcar to be uncoupled from couplers of other flatcars,
connecting the power module of the power and traction system (3) with the running gear, and positioning the flatcar by the positioning system (5), and
controlling, by the onboard control system (1), the powered rail flatcar for containers to move to a destination according to a transportation starting point, an operating destination instruction and an operating permission instruction of the container, wherein said operating permission instruction relates to a free distance in front of the forward road for said powered rail flatcar for containers.

8. The control method for the operating modes of the powered rail flatcar for containers of claim 6, **characterized in that** when the instruction of executing a coupled operating mode of a powered rail flatcar for containers is received by the onboard control system, (1) the method comprises the following steps:
acquiring, by the onboard control system (1), the state information of the positioning system (5) and the operating mode control system (7) according to the instruction of executing the coupled operating mode and the coupled master-slave relationship instruction of the powered rail flatcar for containers, controlling the powered rail flatcar for containers to reach a designated coupled position and issuing the instruction corresponding to the coupled operating mode to the automatic coupler control system (2), the power and traction system (3), the brake system (4) and the positioning system (5), and controlling, by the automatic coupler control system (2), the coupler of the flatcar to be automatically connected to the coupler of the adjacent flatcar, and the power module of the power and traction system (3) to be connected with the running gear, wherein the operating power and the braking power of each flatcar of the coupled train group are respectively borne by the power and traction system (3) and the brake system (4) of each flatcar, the power and traction system (3) and the brake system (4) of the slave control flatcar are controlled by an onboard control system (1) of the master control flatcar, and the powered rail flatcar group for containers is controlled by the onboard control system (1) of the master control flatcar to travel to a destination according to a transportation starting point, an operation destination and an operation permission instruction of the container, wherein said operating permission instruction relates to a free distance in front of the forward road for said powered rail flatcar for containers.

9. The control method for the operating modes of the powered rail flatcar for containers of claim 6, **characterized in that** when a train operating mode instruction for a powered rail flatcar for containers is received by the onboard control system, the method comprises the following steps:
controlling, by the onboard control system (1), the powered rail flatcar for containers to reach a designated connection position according to the instruction of executing the train operating mode of the powered rail flatcar for containers and issuing the instruction corresponding to the train operating mode to the automatic coupler control system (2), the power and traction system (3), the brake system (4) and the positioning system (5), controlling, by the automatic coupler control system (2), the coupler of the flatcar to be automatically connected with the coupler of the adjacent flatcar, and connecting a plurality of powered rail flatcars for containers into a group and coupling up to a locomotive to form a train, separating the power module of a power and traction system from a running gear, exiting the power and traction system from being driven, wherein the running gear is powered by the locomotive, operating power and braking power of each powered rail flatcar for containers are both provided by the locomotive, and the powered rail flatcar group for containers is pulled by a locomotive to a destination according to a transportation starting point, an operation destination and an operation permission instruction of a container, wherein said operating permission instruction relates to a free distance in front of the forward road for said powered rail flatcar for containers.

## Patentansprüche

1. Ein angetriebener Schienenflachwagen für Container, der eine Rahmenstruktur beinhaltet,
wobei: ein Laufwerk an der Unterseite der Rahmenstruktur bereitgestellt ist und Automatikkoppler an zwei Enden der Rahmenstruktur bereitgestellt sind; der angetriebene Schienenflachwagen für Container ferner ein bordseitiges Steuerungssystem (1), ein Automatikkoppler-Steuerungssystem (2), ein Leistungs- und Traktionssystem (3), ein Bremssystem (4) und ein auf der Rahmenstruktur positioniertes Positionierungssystem (5) beinhaltet; das Automatikkoppler-Steuerungssystem (2) zum Steuern des Kopplers des Flachwagens verwendet wird, um automatisch mit Kopplern von anderen Flachwagen gekoppelt oder von diesen abgekoppelt zu werden; das Leistungs- und Traktionssystem (3) ein Leistungsmodul beinhaltet, das zum Bereitstellen von Leistung für das Laufwerk verwendet wird, und das Leistungsmodul mit dem Laufwerk verbunden oder von diesem getrennt werden kann; das Bremssystem (4) eine Bremse und eine Bremssteuerungsvorrichtung beinhaltet; das Positionierungssystem (5) zum Positionieren des angetriebenen Schienenflachwagens für Container verwendet wird; das bordseitige Steuerungssystem (1) mit dem Automatikkoppler-Steuerungssystem (2), dem Leistungs- und Traktionssystem (3), dem Bremssystem (4) und dem Positionierungssystem (5) in Kommunikationsverbindung steht und zum Erfassen von Statusinformationen von jedem System und Ausgeben von Betriebsanweisungen an jedes System verwendet wird;
wobei das bordseitige Steuerungssystem (1) den angetriebenen Schienenflachwagen für Container so steuert, dass er in einem Einzelflachwagen-Betriebsmodus, einem gekoppelten Betriebsmodus oder einem Zugbetriebsmodus arbeitet; wobei der Leistungsmodus des Leistungsmoduls ein Verbrennungsleistungsmodus, ein Speicherbatteriemodus oder ein Superkondensatormodus ist,
und wenn der angetriebene Schienenflachwagen für Container in einem Einzelflachwagen-Betriebsmodus oder einem gekoppelten Betriebsmodus arbeitet, das bordseitige Steuerungssystem (1) die Leistung des angetriebenen Schienenflachwagens für Container so steuert, dass sie von dem Leistungsmodul bereitgestellt wird;
wenn der angetriebene Schienenflachwagen für Container von einer Lokomotive gezogen wird, um im Zugbetriebsmodus zu arbeiten, das bordseitige Steuerungssystem (1) die Leistung des angetriebenen Schienenflachwagens für Container so steuert, dass sie von der Lokomotive zum Laden des Leistungsmoduls, das sich im Speicherbatteriemodus oder im Superkondensatormodus befindet, bereitgestellt wird.

2. Angetriebener Schienenflachwagen für Container gemäß Anspruch 1, **dadurch gekennzeichnet, dass** er ferner ein Betriebsmodus-Steuerungssystem (7) beinhaltet, wobei das Betriebsmodus-Steuerungssystem (7) ein Betriebsmodus-Umschaltmodul beinhaltet, das in dem bordseitigen Steuerungssystem (1) bereitgestellt ist, wobei das Betriebsmodus-Steuerungssystem zum Ausgeben von entsprechenden Betriebsanweisungen an jedes System gemäß den von dem Containerautomatiksteuerungssystem ausgegebenen Betriebsmodus-Anweisungen und zum Steuern des angetriebenen Schienenflachwagens für Container, um zwischen einem Einzelflachwagen-Betriebsmodus, einem gekoppelten Betriebsmodus und einem Zugbetriebsmodus umzuschalten, verwendet wird.

3. Angetriebener Schienenflachwagen für Container gemäß Anspruch 2, **dadurch gekennzeichnet, dass**: das Betriebsmodus-Steuerungssystem auch eine Traktionsleistungs-Umschaltvorrichtung beinhaltet, die zum Umschalten einer Leistungsquelle des angetriebenen Schienenflachwagens für Container gemäß einer von dem Betriebsmodus-Umschaltmodul ausgegebenen Anweisung verwendet wird, wobei, wenn die Anweisung zum Ausführen eines Einzelflachwagen-Betriebsmodus oder eines gekoppelten Betriebsmodus von dem Betriebsmodus-Umschaltmodul ausgegeben wird, das Leistungsmodul so gesteuert wird, dass es mit dem Laufwerk verbunden wird, wobei das Laufwerk von dem Leistungs- und Traktionssystem angetrieben wird, und wenn die Anweisung zum Ausführen eines Zugbetriebsmodus ausgegeben wird, das Leistungs- und Traktionssystem so gesteuert wird, dass es das Angetriebenwerden beendet und das Laufwerk von der Lokomotive angetrieben wird.

4. Angetriebener Schienenflachwagen für Container gemäß Anspruch 2, **dadurch gekennzeichnet, dass**: das Betriebsmodus-Steuerungssystem auch eine elektrisch angetriebene Umschaltvorrichtung beinhaltet, wobei die elektrisch angetriebene Umschaltvorrichtung zum Umschalten einer Energiespeicherform des angetriebenen Schienenflachwagens für Container gemäß der von dem Betriebsmodus-Umschaltmodul ausgegebenen Anweisung verwendet wird, wobei, wenn von dem Betriebsmodus-Umschaltmodul die Anweisung zum Ausführen eines Einzelflachwagen-Betriebsmodus oder eines gekoppelten Betriebsmodus ausgegeben wird, das Leistungsmodul Energie selbst speichert, und wenn die von dem Betriebsmodus ausgegebene Anweisung ein Zugbetriebsmodus ist, das Leistungsmodul so gesteuert wird, dass es von der Lokomotive geladen wird, zum Laden des Leistungsmoduls, das sich im Speicherbatteriemodus oder im Superkondensatormodus befindet.

5. Angetriebener Schienenflachwagen für Container gemäß Anspruch 1, **dadurch gekennzeichnet, dass** er ferner ein Kommunikationssubsystem (8) beinhaltet, das eine bordseitige drahtlose Kommunikationsvorrichtung, eine drahtlose Fahrzeug-zu-Fahrzeug-Kommunikationsvorrichtung und ein bordseitiges Internet zwischen dem angetriebenen Schienenflachwagen für Container beinhaltet, wobei die bordseitige drahtlose Kommunikationsvorrichtung zum Übertragen von Steuerungsdaten und Statusdaten zwischen dem angetriebenen Schienenflachwagen für Container und dem Containerautomatiksteuerungssystem verwendet wird; die drahtlose Fahrzeug-zu-Fahrzeug-Kommunikationsvorrichtung zum Austauschen von Kurzdistanz-Steuerungsinformationen zwischen dem angetriebenen Schienenflachwagen für Container verwendet wird; und das bordseitige Internet zum Übertragen von Steuerungsdaten und Statusdaten zwischen den Flachwagen in einem gekoppelten Betriebsmodus oder einem Zugbetriebsmodus verwendet wird.

6. Ein Steuerungsverfahren für Betriebsmodi eines angetriebenen Schienenflachwagens für Container gemäß einem der Ansprüche 1 bis 5, das Folgendes beinhaltet: Empfangen, durch das bordseitige Steuerungssystem (1), der Anweisung zum Ausführen eines Einzelflachwagen-Betriebsmodus, eines gekoppelten Betriebsmodus oder eines Zugbetriebsmodus des angetriebenen Schienenflachwagens für Container, und Senden einer Anweisung, die dem Einzelflachwagen-Betriebsmodus, dem gekoppelten Betriebsmodus oder dem Zugbetriebsmodus entspricht, an das Automatikkoppler-Steuerungssystem (2), das Leistungs- und Traktionssystem (3), das Bremssystem (4) und das Positionierungssystem (5) gemäß der empfangenen Betriebsmodus-Anweisung, um den angetriebenen Schienenflachwagen für Container so zu steuern, dass er in einem Einzelflachwagen-Betriebsmodus, einem gekoppelten Betriebsmodus oder einem Zugbetriebsmodus arbeitet.

7. Steuerungsverfahren für die Betriebsmodi des angetriebenen Schienenflachwagens für Container gemäß Anspruch 6, **dadurch gekennzeichnet, dass**, wenn der Einzelflachwagen-Betriebsmodus des angetriebenen Schienenflachwagens für Container durch das bordseitige Steuerungssystem (1) empfangen wird, das Verfahren die folgenden Schritte beinhaltet:
Erfassen, durch das bordseitige Steuerungssystem (1), der Statusinformationen des Positionierungssystems (6) und des Betriebsmodus-Steuerungssystems (7) gemäß der Anweisung zum Ausführen des Einzelflachwagen-Betriebsmodus des angetriebenen Schienenflachwagens für Container,
Ausgeben der Anweisung, die dem Einzelflachwagen-Betriebsmodus entspricht, an das Automatikkoppler-Steuerungssystem (2), das Leistungs- und Traktionssystem (3), das Bremssystem (4) und das Positionierungssystem (5),
Steuern, durch das Automatikkoppler-Steuerungssystem (2), des Kopplers des Flachwagens, um von Kopplern von anderen Flachwagen abgekoppelt zu werden, Verbinden des Leistungsmoduls des Leistungs- und Traktionssystems (3) mit dem Laufwerk, und Positionieren des Flachwagens durch das Positionierungssystem (5), und Steuern, durch das bordseitige Steuerungssystem (1), des angetriebenen Flachwagens für Container, um gemäß einem Transportausgangspunkt, einer Betriebszielanweisung und einer Betriebserlaubnisanweisung des Containers an ein Ziel bewegt zu werden, wobei sich die Betriebserlaubnisanweisung auf eine freie Distanz vor dem Front-Straßenteil des angetriebenen Schienenflachwagens für Container bezieht.

8. Steuerungsverfahren für die Betriebsmodi des angetriebenen Schienenflachwagens für Container gemäß Anspruch 6, **dadurch gekennzeichnet, dass**, wenn die Anweisung zum Ausführen eines gekoppelten Betriebsmodus eines angetriebenen Schienenflachwagens für Container durch das bordseitige Steuerungssystem (1) empfangen wird, das Verfahren die folgenden Schritte beinhaltet:
Erfassen, durch das bordseitige Steuerungssystem (1), der Statusinformationen des Positionierungssystems (5) und des Betriebsmodus-Steuerungssystems (7) gemäß der Anweisung zum Ausführen des gekoppelten Betriebsmodus und der gekoppelten Master-Slave-Beziehung-Anweisung des angetriebenen Schienenflachwagens für Container, Steuern des angetriebenen Schienenflachwagens für Container, um eine designierte gekoppelte Position zu erreichen, und Ausgeben der Anweisung, die dem gekoppelten Betriebsmodus entspricht, an das Automatikkoppler-Steuerungssystem (2), das Leistungs- und Traktionssystem (3), das Bremssystem (4) und das Positionierungssystem (5), und Steuern, durch das Automatikkoppler-Steuerungssystem (2), des Kopplers des Flachwagens, um mit dem Koppler des angrenzenden Flachwagens automatisch verbunden zu werden, und des Leistungsmoduls des Leistungs- und Transaktionssystems (3), um mit dem Laufwerk verbunden zu werden, wobei die Betriebsleistung und die Bremsleistung von jedem Flachwagen der gekoppelten Zuggruppe jeweils von dem Leistungs- und Traktionssystem (3) und dem Bremssystem (4) von jedem Flachwagen unterstützt werden, das Leistungs- und Traktionssystem (3) und das Bremssystem (4) des Slave-Steuerungs-Flachwagens durch ein bordseitiges Steuerungssystem (1) des Master-Steuerungs-Flachwagens gesteuert werden, und die angetriebene Schienenflachwagengruppe für Container durch das bordseitige Steuerungssystem (1) des Master-Steuerungs-Flachwagens gesteuert wird, um gemäß einem Transportausgangspunkt, einer Betriebsziel- und einer Betriebserlaubnisanweisung des Containers an ein Ziel zu fahren, wobei sich die Betriebserlaubnisanweisung auf eine freie Distanz vor dem Front-Straßenteil des angetriebenen Schienenflachwagens für Container bezieht.

9. Steuerungsverfahren für die Betriebsmodi des angetriebenen Schienenflachwagens für Container gemäß Anspruch 6, **dadurch gekennzeichnet, dass**, wenn durch das bordseitige Steuerungssystem eine Zugbetriebsmodusanweisung für einen angetriebenen Schienenflachwagen für Container empfangen wird, das Verfahren die folgenden Schritte beinhaltet:
Steuern, durch das bordseitige Steuerungssystem (1), des angetriebenen Schienenflachwagens für Container, um eine designierte Verbindungsposition gemäß der Anweisung zum Ausführen des Zugbetriebsmodus des angetriebenen Schienenflachwagens für Container zu erreichen, und Ausgeben der Anweisung, die dem Zugbetriebsmodus entspricht, an das Automatikkoppler-Steuerungssystem (2), das Leistungs- und Traktionssystem (3), das Bremssystem (4) und das Positionierungssystem (5),
Steuern, durch das Automatikkoppler-Steuerungssystem (2), des Kopplers des Flachwagens, um mit dem Koppler des angrenzenden Flachwagens automatisch verbunden zu werden, und Verbinden einer Vielzahl von angetriebenen Schienenflachwagen für Container zu einer Gruppe und Ankoppeln an eine Lokomotive, um einen Zug zu bilden, Lösen des Leistungsmoduls eines Leistungs- und Traktionssystems von dem Laufwerk, Beenden des Angetriebenwerdens des Leistungs- und Traktionssystems, wobei das Laufwerk von der Lokomotive angetrieben wird, die Betriebsleistungen sowie die Bremsleistung von jedem angetriebenen Schienenflachwagen für Container von der Lokomotive bereitgestellt werden, und die angetriebene Schienenflachwagengruppe für Container gemäß einem Transportausgangspunkt, einer Betriebsziel- und einer Betriebserlaubnisanweisung eines Containers von einer Lokomotive an ein Ziel gezogen wird,
wobei sich die Betriebserlaubnisanweisung auf eine freie Distanz vor dem Front-Straßenteil des angetriebenen Schienenflachwagens für Container bezieht.

## Revendications

1. Un wagon plat ferroviaire motorisé pour conteneurs comprenant une structure de châssis,
où : des organes de roulement sont prévus au fond de la structure de châssis, et des attelages automatiques sont prévus aux deux extrémités de la structure de châssis ; le wagon plat ferroviaire motorisé pour conteneurs comprend en outre un système de commande embarqué (1), un système de commande d'attelage automatique (2), un système d'alimentation et de traction (3), un système de freinage (4) et un système de positionnement (5) positionné sur la structure de châssis ; le système de commande d'attelage automatique (2) est utilisé pour commander à l'attelage du wagon plat d'être automatiquement attelé aux attelages d'autres wagons plats ou dételé de ceux-ci ; le système d'alimentation et de traction (3) comprend un module d'alimentation utilisé pour fournir de la puissance pour les organes de roulement, et le module d'alimentation peut être connecté aux organes de roulement ou déconnecté de ceux-ci ; le système de freinage (4) comprend un frein et un dispositif de commande de frein ; le système de positionnement (5) est utilisé pour positionner le wagon plat ferroviaire motorisé pour conteneurs ; le système de commande embarqué (1) est en connexion de communication avec le système de commande d'attelage automatique (2), le système d'alimentation et de traction (3), le système de freinage (4) et le système de positionnement (5) et est utilisé pour acquérir des informations d'état de chaque système et délivrer des instructions de fonctionnement à chaque système ;
dans lequel ledit système de commande embarqué (1) commande au wagon plat ferroviaire motorisé pour conteneurs de fonctionner dans un mode de fonctionnement en wagon plat unique, un mode de fonctionnement sous forme attelée ou un mode de fonctionnement en train ;
dans lequel le mode d'alimentation du module d'alimentation est un mode d'alimentation à combustion interne, un mode accumulateur ou un mode supercondensateur, et lorsque le wagon plat ferroviaire motorisé pour conteneurs fonctionne dans un mode de fonctionnement en wagon plat unique ou un mode de fonctionnement sous forme attelée, le système de commande embarqué (1) commande la puissance du wagon plat ferroviaire motorisé pour conteneurs destinée à être fournie par le module d'alimentation ;
lorsque le wagon plat ferroviaire motorisé pour conteneurs est tiré par une locomotive afin de fonctionner dans le mode de fonctionnement en train, le système de commande embarqué (1) commande la puissance du wagon plat ferroviaire motorisé pour conteneurs destinée à être fournie par la locomotive pour charger le module d'alimentation qui se trouve dans le mode accumulateur ou le mode supercondensateur.

2. Le wagon plat ferroviaire motorisé pour conteneurs de la revendication 1, **caractérisé par le fait qu'**il comprend en outre un système de commande de mode de fonctionnement (7), dans lequel le système de commande de mode de fonctionnement (7) comprend un module de commutation de mode de fonctionnement prévu dans le système de commande embarqué (1), le module de commutation de mode de fonctionnement est utilisé pour délivrer des instructions de fonctionnement correspondantes à chaque système selon les instructions de mode de fonctionnement délivrées par le système de commande automatique de conteneur, et commander au wagon plat ferroviaire motorisé pour conteneurs de commuter entre un mode de fonctionnement en wagon plat unique, un mode de fonctionnement sous forme attelée et un mode de fonctionnement en train.

3. Le wagon plat ferroviaire motorisé pour conteneurs de la revendication 2, **caractérisé en ce que** : le système de commande de mode de fonctionnement comprend également un dispositif de commutation traction alimentation utilisé pour commuter une source d'alimentation du wagon plat ferroviaire motorisé pour conteneurs selon une instruction délivrée par le module de commutation de mode de fonctionnement, lorsque l'instruction d'exécuter un mode de fonctionnement en wagon plat unique ou un mode de fonctionnement sous forme attelée est délivrée par le module de commutation de mode de fonctionnement, il est commandé au module d'alimentation d'être connecté aux organes de roulement, dans lequel les organes de roulement sont alimentés par le système d'alimentation et de traction, et lorsque l'instruction d'exécuter un mode de fonctionnement en train est délivrée, il est commandé au système d'alimentation et de traction de cesser d'être entraîné et les organes de roulement sont alimentés par la locomotive.

4. Le wagon plat ferroviaire motorisé pour conteneurs de la revendication 2, **caractérisé en ce que** : le système de commande de mode de fonctionnement comprend également un dispositif de commutation alimenté électriquement, dans lequel le dispositif de commutation alimenté électriquement est utilisé pour commuter une forme de stockage d'énergie du wagon plat ferroviaire motorisé pour conteneurs selon l'instruction délivrée par le module de commutation de mode de fonctionnement, lorsque l'instruction d'exécuter un mode de fonctionnement en wagon plat unique ou un mode de fonctionnement sous forme attelée est délivrée par le module de commutation de mode de fonctionnement, le module d'alimentation stocke de l'énergie lui-même, et lorsque l'instruction délivrée par le mode de fonctionnement est un mode de fonctionnement en train, il est commandé au module d'alimentation d'être chargé par la locomotive pour charger ledit module d'alimentation qui se trouve dans le mode accumulateur ou le mode supercondensateur.

5. Le wagon plat ferroviaire motorisé pour conteneurs de la revendication 1, **caractérisé par le fait qu'**il comprend en outre un sous-système de communication (8) comprenant un dispositif de communication sans fil embarqué, un dispositif de communication sans fil de véhicule à véhicule et l'internet embarqué entre les wagons plats ferroviaires motorisés pour conteneurs, dans lequel le dispositif de communication sans fil embarqué est utilisé pour transmettre des données de commande et des données d'état entre le wagon plat ferroviaire motorisé pour conteneurs et le système de commande automatique de conteneur ; le dispositif de communication sans fil de véhicule à véhicule est utilisé pour échanger des informations de commande à courte distance entre les wagons plats ferroviaires motorisés pour conteneurs ; et l'internet embarqué est utilisé pour transmettre des données de commande et des données d'état entre les wagons plats dans un mode de fonctionnement sous forme attelée ou un mode de fonctionnement en train.

6. Un procédé de commande pour des modes de fonctionnement de wagon plat ferroviaire motorisé pour conteneurs tel que revendiqué dans l'une quelconque des revendications 1 à 5, comprenant :
la réception, par le système de commande embarqué (1), de l'instruction d'exécuter un mode de fonctionnement en wagon plat unique, un mode de fonctionnement sous forme attelée ou un mode de fonctionnement en train du wagon plat ferroviaire motorisé pour conteneurs, et l'envoi d'une instruction correspondant au mode de fonctionnement en wagon plat unique, au mode de fonctionnement sous forme attelée ou au mode de fonctionnement en train au système de commande d'attelage automatique (2), au système d'alimentation et de traction (3), au système de freinage (4) et au système de positionnement (5) selon l'instruction de mode de fonctionnement reçue afin de commander au wagon plat ferroviaire motorisé pour conteneurs de fonctionner dans un mode de fonctionnement en wagon plat unique, un mode de fonctionnement sous forme attelée ou un mode de fonctionnement en train.

7. Le procédé de commande pour les modes de fonctionnement du wagon plat ferroviaire motorisé pour conteneurs de la revendication 6, **caractérisé en ce que**, lorsque le mode de fonctionnement en wagon plat unique du wagon plat ferroviaire motorisé pour conteneurs est reçu par le système de commande embarqué (1), le procédé comprend les étapes suivantes :
l'acquisition, par le système de commande embarqué (1), des informations d'état du système de positionnement (6) et du système de commande de mode de fonctionnement (7) selon l'instruction pour exécuter le mode de fonctionnement en wagon plat unique du wagon plat ferroviaire motorisé pour conteneurs,
la délivrance de l'instruction correspondant au mode de fonctionnement en wagon plat unique au système de commande d'attelage automatique (2), au système d'alimentation et de traction (3), au système de freinage (4) et au système de positionnement (5),
la commande, par le système de commande d'attelage automatique (2), à l'attelage du wagon plat d'être dételé des attelages d'autres wagons plats,
la connexion du module d'alimentation du système d'alimentation et de traction (3) aux organes de roulement, et le positionnement du wagon plat par le système de positionnement (5), et la commande, par le système de commande embarqué (1), au wagon plat ferroviaire motorisé pour conteneurs de se déplacer vers une destination selon un point de départ de transport, une instruction de destination de fonctionnement et une instruction de permission de fonctionnement du conteneur, dans lequel ladite instruction de permission de fonctionnement se rapporte à une distance libre devant la route avant pour ledit wagon plat ferroviaire motorisé pour conteneurs.

8. Le procédé de commande pour les modes de fonctionnement du wagon plat ferroviaire motorisé pour conteneurs de la revendication 6, **caractérisé en ce que**, lorsque l'instruction d'exécuter un mode de fonctionnement sous forme attelée d'un wagon plat ferroviaire motorisé pour conteneurs est reçue par le système de commande embarqué (1), le procédé comprend les étapes suivantes :
l'acquisition, par le système de commande embarqué (1), des informations d'état du système de positionnement (5) et du système de commande de mode de fonctionnement (7) selon l'instruction d'exécuter le mode de fonctionnement sous forme attelée et l'instruction de relation maître-esclave sous forme attelée du wagon plat ferroviaire motorisé pour conteneurs, la commande au wagon plat ferroviaire motorisé pour conteneurs d'atteindre une position attelée désignée et la délivrance de l'instruction correspondant au mode de fonctionnement sous forme attelée au système de commande d'attelage automatique (2), au système d'alimentation et de traction (3), au système de freinage (4) et au système de positionnement (5), et la commande, par le système de commande d'attelage automatique (2), à l'attelage du wagon plat d'être automatiquement raccordé à l'attelage du wagon plat adjacent, et au module d'alimentation du système d'alimentation et de traction (3) d'être connecté aux organes de roulement, dans lequel la puissance de fonctionnement et la puissance de freinage de chaque wagon plat du groupe de trains attelés sont respectivement portées par le système d'alimentation et de traction (3) et le système de freinage (4) de chaque wagon plat, le système d'alimentation et de traction (3) et le système de freinage (4) du wagon plat de commande esclave sont commandés par un système de commande embarqué (1) du wagon plat de commande maître, et il est commandé au groupe de wagons plats ferroviaires motorisés pour conteneurs par le système de commande embarqué (1) du wagon plat de commande maître de voyager vers une destination selon un point de départ de transport, une destination de fonctionnement et une instruction de permission de fonctionnement du conteneur, dans lequel ladite instruction de permission de fonctionnement se rapporte à une distance libre devant la route avant pour ledit wagon plat ferroviaire motorisé pour conteneurs.

9. Le procédé de commande pour les modes de fonctionnement du wagon plat ferroviaire motorisé pour conteneurs de la revendication 6, **caractérisé en ce que**, lorsqu'une instruction de mode de fonctionnement en train pour un wagon plat ferroviaire motorisé pour conteneurs est reçue par le système de commande embarqué, le procédé comprend les étapes suivantes :
la commande, par le système de commande embarqué (1), au wagon plat ferroviaire motorisé pour conteneurs d'atteindre une position de raccordement désignée selon l'instruction d'exécuter le mode de fonctionnement en train du wagon plat ferroviaire motorisé pour conteneurs et la délivrance de l'instruction correspondant au mode de fonctionnement en train au système de commande d'attelage automatique (2), au système d'alimentation et de traction (3), au système de freinage (4) et au système de positionnement (5),
la commande, par le système de commande d'attelage automatique (2), à l'attelage du wagon plat d'être automatiquement raccordé à l'attelage du wagon plat adjacent, et le raccordement d'une pluralité de wagons plats ferroviaires motorisés pour conteneurs en un groupe et l'attelage à une locomotive afin de former un train, la séparation du module d'alimentation d'un système d'alimentation et de traction d'organes de roulement, la cessation de l'entraînement du système d'alimentation et de traction, dans lequel les organes de roulement sont alimentés par la locomotive, la puissance de fonctionnement et la puissance de freinage de chaque wagon plat ferroviaire motorisé pour conteneurs sont toutes les deux fournies par la locomotive, et le groupe de wagons plats ferroviaires motorisés pour conteneurs est tiré par une locomotive vers une destination selon un point de départ de transport, une destination de fonctionnement et une instruction de permission de fonctionnement d'un conteneur,
dans lequel ladite instruction de permission de fonctionnement se rapporte à une distance libre devant la route avant pour ledit wagon plat ferroviaire motorisé pour conteneurs.
